# EUROPEAN PATENT APPLICATION

(11) **EP 2 006 043 A1**
(43) Date of publication of application: **24.12.2008**
(21) Application number: 07737762.0
(22) Date of filing: 05.03.2007
(51) Int. Cl.: B23B 51/06

(54) **DEEP HOLE DRILLING MACHINE**

(30) Priority: 07.04.2006 JP 2006106089
(71) Applicant: UNITAC, Incorporated, Amagasaki-shi, Hyogo 661-0033 (JP)
(72) Inventor: NOMURA, Takuji, Amagasaki-shi, Hyogo 661-0033 (JP); HANABUSA, Nobuyuki, Amagasaki-shi, Hyogo 661-0033 (JP)
(74) Representative: HOFFMANN EITLE
(86) International application number: PCT/JP2007/054164
(87) International publication number: WO 2007/116620

(57) **Abstract**

A deep hole drilling machine employing an external system for supplying coolant to a drilling portion in which high drilling efficiency can be achieved even if the drilling hole is deep by enhancing the discharge performance of chips from the drilling portion without setting the supply pressure of coolant at a high level. A tubular boring head (2) having discharging openings (4a, 4b) communicating with a chip discharge passage (10) on the edge (3a-3c) side is attached to the distal end of a hollow boring bar (1) having interior serving as the chip discharge passage (10), bypass holes (5,...) are provided at a plurality of circumferential positions in the circumferential wall (21) of the boring head (2) to penetrate obliquely such that the outer opening (5a) is located closer to the distal end side of the head than the inner opening (5b), and a part of coolant supplied externally to the drilling portion side flows through the bypass holes (5,...) into the boring head (2), thus generating attraction force to the discharge side and accelerating discharge of the chips (S).

## Description

### Technical Field

The present invention relates to a deep-hole drilling machine for discharging cuttings (chips)generated during cutting outside thereof along with coolant supplied to the drilling portion by an external feeding system through the interior of a boring bar as in a so-called BTA (Boring Trepanning Association) system.

### Background

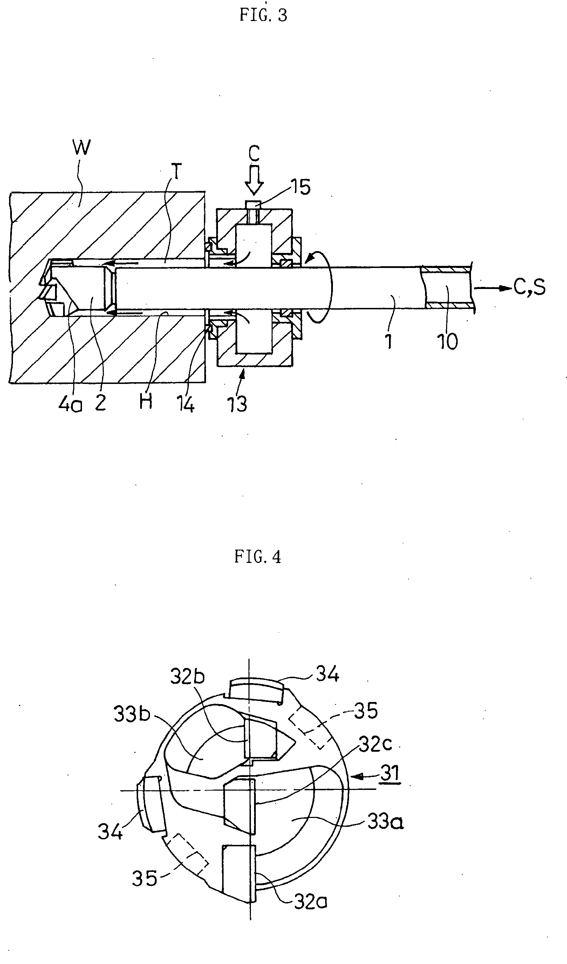

Generally, the drilling efficiency of deep holes does not depend on the performance of a tooling system but greatly depends on the discharge capacity of cuttings (chips) generated in a drilling hole during cutting to the exterior. Therefore, in a deep-hole drilling machine, a hollow boring bar is employed, and at the same time, as shown in, for example, FIG. 4, discharging openings 33a and 33b, which are open so as to face cutting blades 32a, 32c and 32b are provided at the tip end portion of a boring head 31 connected to the front end of a boring bar, wherein cuttings (chips) are discharged outside from the discharging openings 33a and 33b through the interior of the corresponding boring bar together with coolant supplied to the drilling portion. Also, in the drawing, reference numeral 34 denotes a guide pad secured at the tip end side of the outer circumference of the boring head 31, and reference numeral 35 denotes a clamp groove secured slightly at the inner side of the outer circumference thereof.

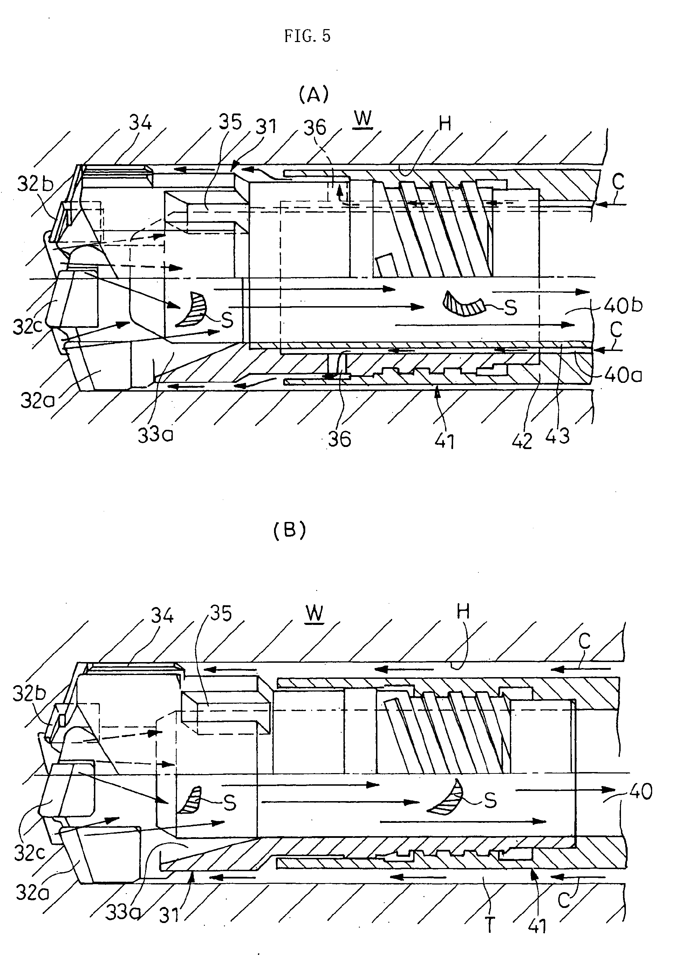

In this connection, in regard to supply of coolant to the drilling portion in such a deep-hole drilling machine, there are two types, one of which is an inner supply system (Single-tube system) such as a so-called BTA system shown in FIG. 5(A), and the other of which is an outer supply system (Double tube system) such as a so-called ejector system shown in FIG. 5 (B) . Also, with respect to cutting, there are cases where the boring bar side is rotated and where a workpiece to be cut is rotated.

Coolant in the above-described inner supply system is introduced into a coolant supply path 40a between the inner tube 42 and the outer tube 43 at the proximal side of a double-tube type boring bar 41 as shown by the arrow in FIG. 5(A), is flown outside through a coolant outlet 36 secured on the circumferential wall of the boring head 31 at the distal end side, and is supplied to the drilling portion side. After that, the coolant is flown from the discharging openings 33a and 33b of the boring head 31 into a discharge passage 40b structured by the inner side of the inner tube 43 and is discharged outside along with cuttings (chips) generated in the drilling portion. Therefore, in this system, the flow resistance does not change at the supply side of coolant during cutting, wherein it does not matter to the discharge performance of cuttings (chips) that a cut hole H is made deep.

On the contrary, coolant in the above-described outer supply system is supplied to the drilling portion through clearance T between the boring bar 41 and the inner circumference of a drilling hole H, and similarly, is discharged from the discharging openings 33a and 33b of the boring head 31 to the outside through the chip discharge passage 40 in the boring bar 41 along with the cuttings (chips) generated in the drilling portion. However, since, in line with advancement of cutting, the supply path is lengthened, a pressure loss is accordingly increased due to the flow path resistance. Therefore, there is a shortcoming in this system that the deeper the drilling hole becomes, the worse the discharge performance of cuttings (chips) by means of coolant becomes. In addition, it is necessary to set the supply pressure of coolant to a higher level to compensate a lowering in the above-described pressure loss, wherein there arises another problem in that the facility cost and energy cost are increased therefor.

### Disclosure of the Invention

The present invention was developed in view of the above-described situations, and it is therefore an object of the present invention to provide a deep-hole drilling machine particularly as a machine for supplying coolant to the drilling portion by means of an outer supply system, which is capable of achieving high drilling efficiency, even if a drilling hole is deepened, by improving the distance performance of cuttings (chips) from the drilling portion without setting the supply pressure of coolant to a high level.

### Summary of the Invention

In order to achieve the above-described object, a deep-hole drilling machine according to a first aspect of the invention is shown with reference numerals in the accompanying drawings. The deep-hole drilling machine is configured so that a tubular boring head 2 having discharging openings 4a and 4b communicating with a chip discharge passage 10 is attached to cutting blades 3a and 3c at the distal end of a hollow boring bar 1 the interior of which is made into the chip discharge passage 10, coolant C is supplied from the exterior to the cutting blades 3a through 3c side through clearance between the outer circumferential surface of the boring bar 1 and the inner circumferential surface of a drilling hole H, and cuttings (chips) S generated by cutting are discharged from the discharging openings 4a and 4b to the outside through the chip discharge passage 10 along with the coolant C, and further includes bypass holes 5 diagonally provided at a plurality of points in the circumferential direction of the circumferential wall 21 of the boring head 2 so as to penetrate the circumferential wall 21 of the boring head 2 and so that the outer opening 5a is positioned closer to the head distal end side than the inner opening 5b, a part of the coolant C supplied from the outside to the drilling portion side is caused to flow from the bypass holes 5 into the interior of the boring head 2 to generate an induction force to the discharge side, and cuttings (chips) S are propelled to be discharged by the induction force.

The deep-hole drilling machine according to a second aspect of the invention is a deep-hole drilling machine according to the first aspect, in which the respective bypass holes 5 described above are diagonally provided so that the outer opening 5a is positioned closer to the front side in the rotation direction of the corresponding boring head 2 than the inner opening 5b in relative rotation of the boring head 2 and a workpiece W.

With the deep-hole drilling machine according to the first aspect of the invention, a part of coolant supplied from the outside to the drilling portion through clearance between the boring bar and the inner circumference of a drilling hole during cutting is caused to flow from the corresponding bypass holes in the interior of the boring head. However, since the flow-in direction is diagonally provided toward the rear side, an induction force is generated toward the discharge side in the chip discharge passage, wherein cuttings (chips) are propelled to be discharged from the drilling portion by the induction force. Therefore, even if the drilling hole H is deepened in line with advancement of cutting, high drilling efficiency can be achieved while sufficiently securing discharge performance of cuttings (chips) from the drilling portion, wherein the supply pressure of coolant is not particularly increased, and it is possible to prevent the facility cost and energy cost from being increased.

According to the second aspect of the invention, since the respective bypass holes described above are diagonally provided so that the outer opening is positioned further at the front side in the relative rotation direction of the boring head than the inner opening, a flow of the coolant through the respective bypass holes from the outside to the inside is propelled in line with relative rotation in cutting, and at the same time, eddies are brought about in the interior, wherein the induction force to the discharge side is further increased in the chip discharge passage, and higher drilling efficiency is further achieved since the discharge performance of cuttings (chips) is further increased.

### Brief Description of the Drawings

FIG. 1 shows a boring head of a deep-hole drilling machine according to one embodiment of the prevent invention, wherein (A) is a plan view and (B) is a side view;
FIG. 2 shows the vicinity of the boring head during cutting a deep hole by the above-described deep-hole drilling machine, wherein (A) is a sectional view perpendicular to the axial direction, and (B) is a sectional view along the axial direction;
FIG. 3 is a longitudinally sectional view showing a state of deep-hole cutting by the same deep-hole drilling machine;
FIG. 4 is a plan view showing a boring head in a prior art deep-hole drilling machine; and
FIG. 5 shows the vicinity of a boring head during cutting a deep hole by the prior art deep-hole drilling machine, wherein (A) is a sectional view along the axial direction in the inner supply system of coolant, and (B) is a sectional view along the axial direction in the outer supply system of coolant.

### Description of symbols

- 1: Boring bar
- 10: Chip discharge passage
- 2: Boring head
- 20: Center bore
- 21: Circumferential wall
- 3a through: 3c Cutting blades
- 4a, 4b: Discharging openings
- 5: Bypass hole
- 5a: Outer opening
- 5b: Inner opening
- C: Coolant
- H: Drilling hole
- T: Clearance
- S: Cuttings (Chips)
- W: Workpiece

### Detailed description of the Invention

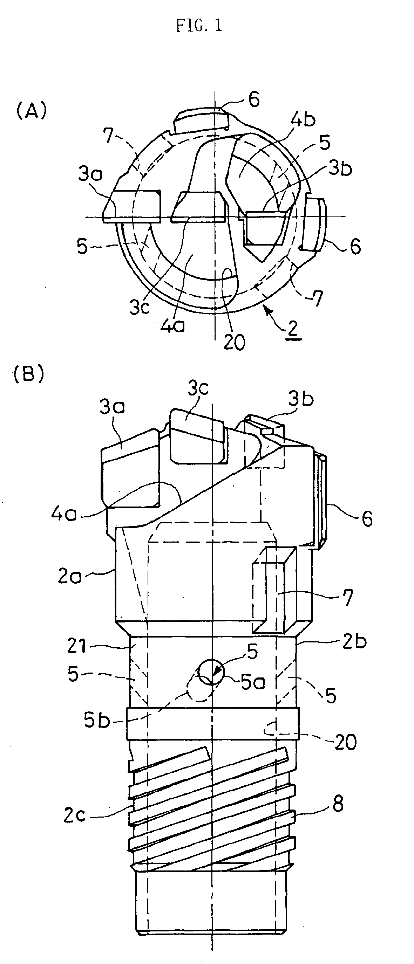

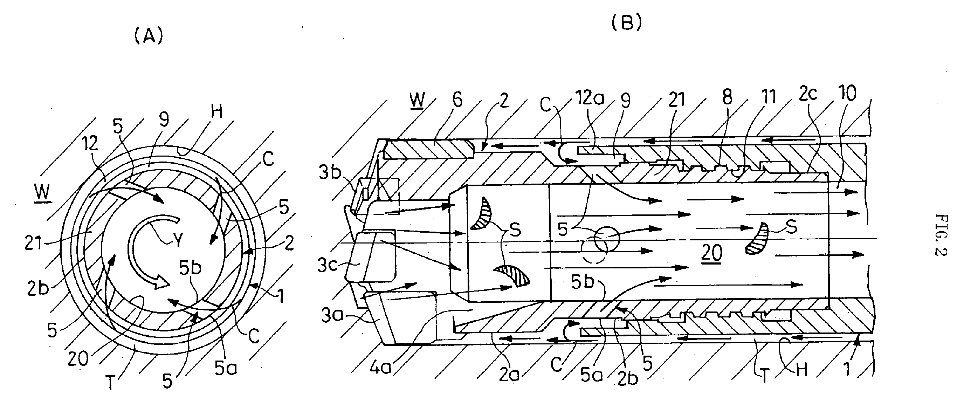

Hereinafter, a detailed description is given of one embodiment of a deep-hole drilling machine according to the present invention with reference to the drawings. FIG. 1 shows a boring head of the corresponding deep-hole drilling machine, FIG. 2 shows the boring head side of the corresponding deep-hole drilling machine during cutting, and FIG. 3 shows a drilling state by the corresponding deep-hole drilling machine, respectively.

As shown in FIGS. 1(A) and (B), the boring head 2 of the deep-hole drilling machine is roughly tubular, has its distal end formed to be acutely conical, and includes two large and small discharge holes 4a and 4b which are opened from the distal end face to the side and are fan-shaped when being observed from the distal end side. These discharging openings 4a and 4b communicate with the center bore 20 opened at its rear end, wherein a central cutting blade 3c and peripheral cutting blade 3a are attached to the edge face of the large discharging opening 4a, and an intermediate cutting blade 3b is fixed by welding to the edge face of the small discharging opening 4b. Also, these cutting blades 3a through 3c are made of a cemented carbide alloy, and are disposed so that the blade tips are oriented roughly in the same diametrical direction.

In the boring head 2, as in the prior art apparatuses, guide pads 6 and 6 are positioned and fixed near the distal end between both the discharging openings 4a and 4b at the outer circumference whose outer diameter is slightly larger, and at the same time, clamp grooves 7 and 7 are positioned and formed slightly inwardly of the outer circumference. Further, a male threading portion 8 is provided on the outer circumference of the proximal portion 2c, and bypass holes 5 penetrating the inside and outside of the circumferential wall 21 are provided at a plurality of points (four points are illustrated) in the circumferential direction of the intermediate portion 2b. And, as for the respective bypass holes 5, the outer opening 5a is positioned closer to the distal end side of the head than the inner opening 5b as shown in FIG. 2 (A) and (B), and is diagonally provided so as to be positioned further at the front side in the relative rotation direction (the arrow direction Y shown in FIG. 2(A)) when cutting using the corresponding boring head 2.

On the other hand, a hollow boring bar of the deep-hole drilling machine is shaped to be like a round pipe as shown in FIG. 2(B), and the interior thereof is constitutes a discharge passage 10. Since the male threading portion 8 at the proximal end 2c side of the boring head 2 is screwed in and tightened in female threading 11 secured on the inner circumference of the front end portion, the corresponding boring head 2 is concentrically linked with the distal end portion and held in a position. And, the linked boring head 2 is entered into a state where the distal end portion 2a is protruded from the distal end of the boring bar 1. However, annular clearance 9 is formed between the outer circumference of the intermediate portion 2b and the inner circumference of the distal end portion 12 of the boring bar 1, whereby the bypass holes 5 are caused to communicate with the exterior.

With respect to deep-hole drilling by this deep-hole drilling machine, the proximal end side of the boring bar 1 having a boring head 2 held at its distal end is linked to a spindle of a machine tool by means of a workpiece chuck (not illustrated), driven and rotated, or the workpiece W side is rotated. At this time, coolant is supplied from an outer supply system, wherein as shown in FIG. 3, using a coolant supply jacket by which the hollow boring bar 1 is enclosed in oil, coolant C is supplied at a high pressure from the inlet port 15 into the corresponding jacket 13 in a state where the jacket 13 is pressed to a workpiece W via a seal link 14, the coolant C is supplied to the distal end side of the boring head 2 through clearance T between the outer circumferential surface of the boring bar 1 and the inner circumferential surface of a drilling hole H, and the coolant C is caused to flow from the discharging openings 4a and 4b of the boring head 2 into the chip discharge passage 10 in the boring bar 1 along with cuttings (chips) S generated at a drilling portion, and is then discharged outside.

In this deep-hole drilling, a part of the coolant C sent deep through the clearance T between the outer circumference of the boring bar 1 and the inner circumferential surface of a drilling hole H is flown from the bypass holes 5 into the interior of the boring head 2 at the distal end portion of the corresponding boring bar 1, and the remaining portion thereof is oriented to a cutting position at the distal end of the boring head 2. In this connection, since, in the respective bypass holes 5, the outer opening 5a is diagonally provided so as to be positioned closer to the distal end side of the head than the inner opening 5b, an induction force to the discharge side is brought about in the center bore 20 and in the chip discharge passage 10 by virtue of flows of the coolant C flown in through the bypass holes 5. Furthermore, since, in the respective bypass holes 5, the outer opening 5a is diagonally provided so as to be positioned further at the front side in the rotation direction of the corresponding boring head 2 than the inner opening 5b as shown in FIG. 2(A), flows of the coolant C passed through the bypass holes 5 from outside to inside are propelled in line with the relative rotations (in the arrow Y direction illustrated) of the boring bar 1 and the boring head 2, and further eddies are generated in the interior of the center bore 20, wherein the induction force to the discharge side is further increased.

Therefore, cuttings (chips) S generated in line with cutting are quickly moved from the discharging openings 4a and 4b into the center bore 20 along with the coolant C supplied to the drilling portion by an intensive induction force operating to the discharge side in the boring head 2, and are remarkably efficiently discharged through the chip discharge passage 10.

Thus, with the deep-hole drilling machine according to the present invention, even if the drilling hole H is deepened in line with advancement of cutting, discharge performance of cuttings (Chips) S from the drilling portion is sufficiently secured, wherein deep-hole drilling can be carried out at high accuracy and high drilling efficiency. In addition, in this deep-hole drilling machine, since it is not necessary to increase the supply pressure of coolant C to cope with an increase in the pressure loss due to flow path resistance as in the prior arts, the facility cost and energy cost can be reduced.

Also, in the present embodiment, such a mode is illustrated, which is composed of three cutting blades 3a through 3c, which are welded to and fixed at the boring head 2, and two discharging openings 4a and 4b. The present invention may be embodied in various modes, for example, a mode in which the boring head is composed of a single cutting blade and a single discharging opening, a mode in which the boring head is composed of five or more cutting blades of an odd number and two discharging openings, a mode in which the cutting blades are composed of a throw-away chip, or a mode in which cutting blades are integrally formed on the boring head. Also, the boring head may be of an inner threading type contrary to the present embodiment and may be composed so that it is fitted to and screwed to the outside of the baring bar. Further, the present invention may be subjected to various modifications and variations with respect to the detailed configuration regarding the number and formation position of bypass holes 5, number and attaching position of the guide pads, presence or absence and number of clamp grooves, etc.

## Claims

1. A deep hole drilling machine in which a tubular boring head (2) having discharging openings (4a, 4b) communicating with a chip discharge passage (10) on the cutting blades (3a-3c) side is attached to the distal end of a hollow boring bar (1) having interior serving as the chip discharge passage (10), coolant (C) is supplied from the exterior to the cutting blades (3a-3c) side through clearance (T) between the outer circumferential surface of the boring bar (1) and the inner circumferential surface of a drilling hole (H), and the chips (S) generated by drilling are discharged from the discharging openings (4a, 4b) to the outside through the chip discharge passage (10) along with the coolant (C), wherein bypass holes are provided at a plurality of circumferential positions in the circumferential wall (21) of the boring head (2) to penetrate obliquely such that the outer opening (5a) is located closer to the distal end side of the head than the inner opening (5b), and a part of coolant (C) supplied externally to the drilling portion side flows through the bypass holes into the boring head (2), thus generating attraction force to the discharge side and accelerating discharge of the chips (S).

2. The deep-hole drilling machine according to Claim 1, wherein the respective bypass holes (5) are diagonally provided so that the outer opening (5a) is positioned further at the front side in the rotation direction of the boring head (2) than the inner opening (5b) in relative rotation of the boring head (2) and a workpiece (W).
